# EUROPEAN PATENT SPECIFICATION

(11) **EP 2 378 933 B1**
(45) Date of publication and mention of the grant of the patent: **03.07.2013**
(21) Application number: 09807466.9
(22) Date of filing: 29.12.2009
(51) Int. Cl.: A47J 31/36, A47J 31/40

(54) **AN INFUSION ASSEMBLY FOR A MACHINE FOR THE PREPARATION OF BEVERAGES**
AUFGUSSANORDNUNG FÜR EINE MASCHINE ZUR ZUBEREITUNG VON GETRÄNKEN
ENSEMBLE D'INFUSION POUR UNE MACHINE DESTINÉE À LA PRÉPARATION DE BOISSONS

(30) Priority: 30.12.2008 IT TO20081008
(43) Date of publication of application: 26.10.2011
(73) Proprietor: Luigi Lavazza S.p.A., 10154 Torino (IT)
(72) Inventor: ICARDI, Danilo, I-10137 Torino (IT)
(74) Representative: Quinterno, Giuseppe
(86) International application number: PCT/IB2009/055975
(87) International publication number: WO 2010/076760

(56) References cited:
- EP-A1- 1 219 216

## Description

The present invention relates to an infusion assembly for a machine for the preparation of beverages, in particular coffee, of the kind defined in the preamble of claim 1.

EP 1 219 216 A1 discloses a beverage-making machine including an infusion assembly of that kind, wherein the receiving member includes a capsule holder body carried by a horizontally slidable drawer. The arrangement is such that for preparing a beverage the drawer is disposed in an extracted position in which it protrudes frontally from the machine to allow one or more capsules to be placed in the capsule holder. Thereafter the drawer is horizontally retracted into the machine, to bring the capsule holder in vertical alignment with an upper, stationary hot water infusion head. By means of an articulated structure driven by a motor, the capsule holder is then raised vertically, separately from the drawer, and is coupled with the hot water infusion head for the preparation of one or more beverages.

One object of the present invention is to propose such an improved dispensing assembly.

This object, together with others, is achieved according to the invention by an infusion assembly according to claim 1.

In one embodiment said second body has a gripping member able to be manually gripped for engagement/disengagement of the first body with/from the second body.

According to a further characteristic feature one of said members is provided with a radially protruding annular sealing element and in the closed position one of said members partially penetrates inside the other one such that said annular sealing element forms an essentially radial seal between them.

Further characteristic features and advantages of the invention will become clear from the following detailed description provided purely by way of a non-limiting example, with reference to the accompanying drawings in which:
Figure 1 is a perspective view of an infusion assembly according to the present invention; and
Figures 2 and 3 are partial perspective views of a member for receiving an infusion assembly according to the invention in which the infusion chamber can be separated and removed.

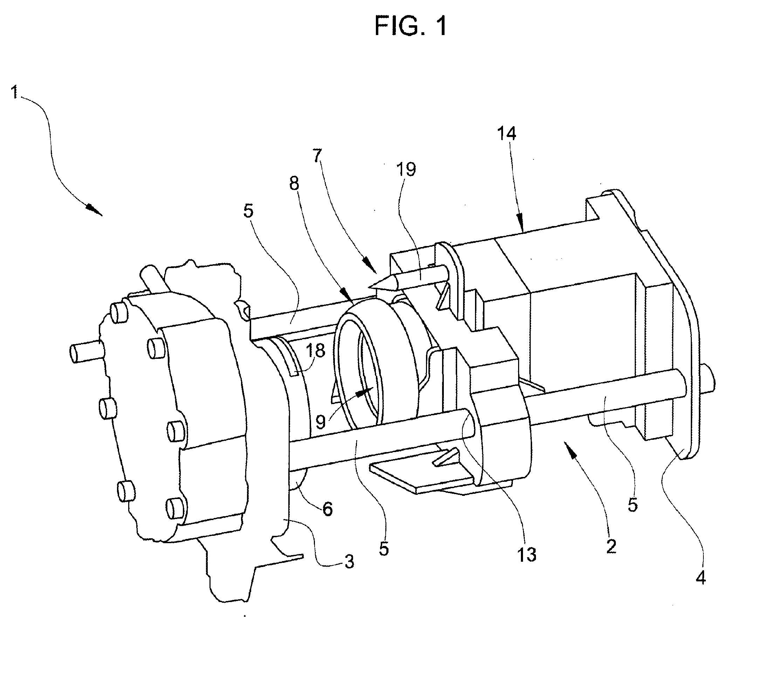

In Figure 1 an infusion assembly according to the invention for a machine for the preparation of beverages, in particular hot beverages, such as coffee, is denoted overall by 1.

The infusion assembly 1 is intended to be mounted in a machine for the preparation of beverages of the type known per se and therefore not illustrated.

In the present description and in the accompanying drawings an infusion assembly 1 for a machine operating with capsules is described, but the invention is also applicable to the infusion assemblies in which a dose of loose substance, i.e. not pre-packaged in capsules, pods or the like, is used.

In the example of embodiment shown, the infusion assembly 1 comprises a support and guide structure 2 which is stationary during operation and comprises two end plates 3 and 4 facing each and interconnected by means of a pair of parallel rods 5 which are preferably cylindrical.

The structure 2 supports an abutment member 6 and an associated hollow receiving member 7 which are facing each other.

The receiving member 7 comprises a body 8 in which there is defined a cavity 9 able to receive a dose of substance for the preparation of the beverage, in particular a capsule or pod such as that described in the international patent application WO2008/015642 in the name of the same Applicant.

The abutment member 6 is connected to the plate 3, while the receiving member 7 is mounted displaceable along the rods 5 towards and away from the abutment member 6. For this purpose the receiving member 7 is provided with two parallel through-holes 13 inside which the interconnecting and guiding rods 5 extend.

The displacement of the receiving member 7 relative to the abutment member 6 may be conveniently controlled by an electric linear actuating device denoted overall by 14 in Figure 1.

The members 6 and 7 are in particular able to assume a spaced relative opening position, shown in Figure 1, where a capsule introduced into the machine may be arranged between said members 6 and 7 where for example it is held by means of a retaining device with pivotable jaws. Activation of the actuator 14 is then able to displace the receiving member 7 towards the abutment member 6 until a relative closing position is reached.

In the closing position the members 6 and 7 are coupled with one another in a fluid-tight manner and define an infusion chamber inside which the capsule used for preparation of the beverage is retained.

The abutment member 6 in a manner known per se has at least one duct communicating with channels in associated piercing needles (not visible in the drawings) which in the abovementioned closing condition pass through the lid of the capsule gripped inside the infusion chamber, so as to allow the injection of a flow of water and/or steam inside said capsule.

Conveniently, the abutment member 6 is provided externally with a radially projecting annular sealing element 18. In the closing condition the end of the abutment member 6 penetrates into the body 8 of the receiving member 7 such that the sealing element 18 is radially compressed inside the inlet mouth of the body 8, forming there, advantageously, an essentially radial seal.

With reference to Figure 1, the receiving member conveniently has a longitudinal centring pin 19 which is intended to be introduced inside a corresponding opening or seat of the abutment member 6 in the closing position.

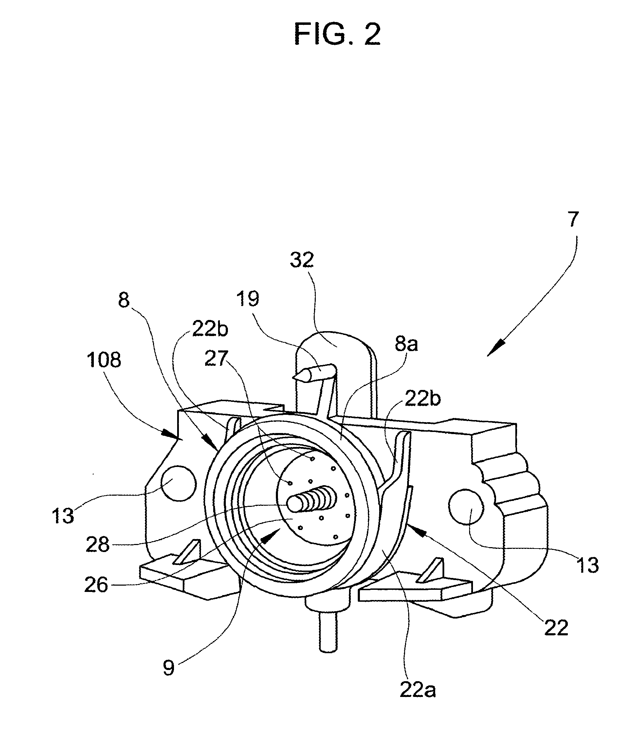

Figures 2 to 3 show an advantageous embodiment of the receiving member 7.

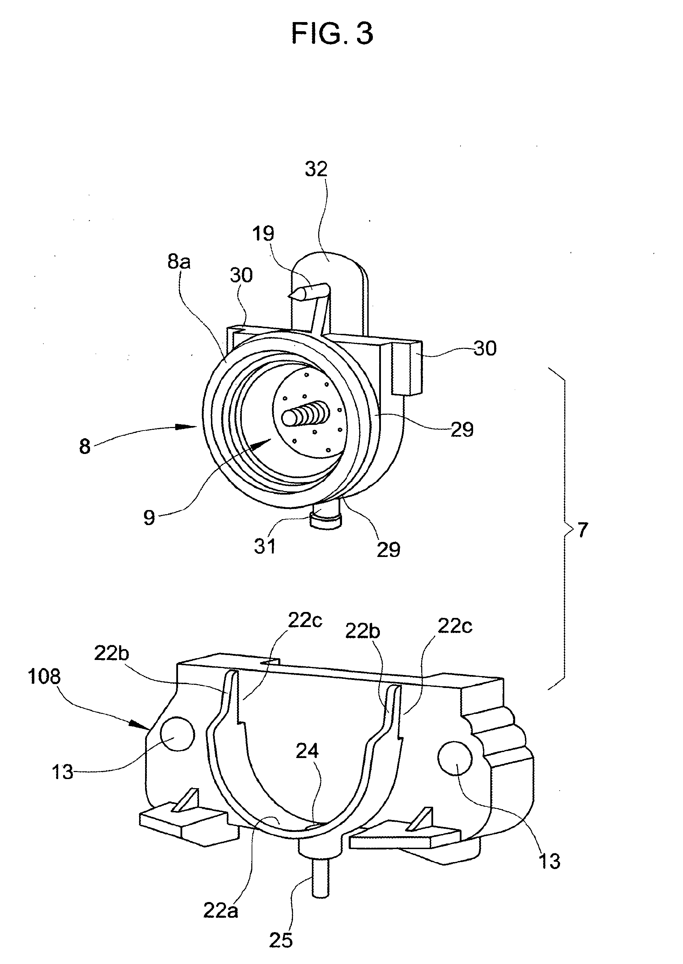

The receiving member 7 is composed of two main bodies 8 and 108 which are different from each other and can be coupled together and separated from each other (see in particular Figure 3).

The body 108 is mounted slidable along the interconnecting and guiding rods 5 and has at the front a retaining formation 22 in the form of a projecting strip which is essentially U-shaped, having a bottom part 22a which is semicircular and top ends 22b which are spaced from the front side of the body 108 so as to define corresponding slotted seats 22c.

An opening 24 (Figure 3) communicating with a bottom spout 25 for dispensing the beverage is formed in the lowest part of the formation 22.

The body 8 forms the cavity 9 which has, mounted therein, an end plate 26 provided with perforated piercing needles 27 intended to penetrate through the end wall of a capsule so as to allow extraction of the beverage. An expulsion spring 28, intended to perform ejection, from the cavity 9, of the used capsules, is associated with the plate 26.

The body 8 has a front collar 8a behind which there is defined an annular groove 29 inside which the bottom semi-circular portion 22a of the formation 22 of the body 108 engages when said bodies 8,108 are coupled together. The body 8 also has a pair of opposite lateral lugs 30 (Figure 3) which are able to engage inside the slotted seats 22c of the body 108. An outflow opening communicating with an outlet nozzle 31 (Figure 3) intended to engage inside the opening 24 of the body 108 is formed in the lowest part of the cavity 9 of the body 8.

At the top the body 8 forms a gripping lug 32 which is directed upwards and intended to be gripped by a user who wishes to disengage the body 8 from the body 108 so as to remove the body 8 from the machine inside which the assembly 1 is incorporated.

The possibility of being able to remove the body 8 is particularly advantageous for allowing easy periodic cleaning of the cavity or chamber 9 and the associated needles 27.

Engagement again of the body 8 with the body 108 is likewise extremely quick and easy.

Obviously, without affecting the principle of the invention, the embodiments and the constructional details may be significantly modified with respect to that described and illustrated purely by way of a non-limiting example, without thereby departing from the scope of the invention as defined in the accompanying claims.

## Claims

1. Infusion assembly (I) for a machine for the preparation of beverages, in particular coffee, comprising a support and guide structure (2) which is stationary during operation and carries an abutment member (6) and an associated hollow receiving member (7), the receiving member (7) being able to receive an amount or dose of a substance, possibly pre-packaged in a capsule or the like, for the preparation of a beverage; said members (6,7) being able to assume a relative closing position in which they are coupled with one another in a fluid-tight manner so as to define an infusion chamber, and a spaced opening position; the abutment member (6) being provided with means (16) for allowing the injection of water and/or steam into the infusion chamber (15); electrically controlled actuator means (14) being provided for causing relative displacement of said members (6, '7) between the opening and closing positions;
wherein the receiving member (7) comprises:
a first body (108) which is mounted movable in said support and guide structure (2) towards and away from the abutment member (6), and
a second body (8), which can be engaged with and disengaged from the first body (108) and in which a cavity (9) is formed, which cavity cooperates so as to define the infusion chamber and can be provided internally with a plurality of perforated needles (27) capable of piercing a wall of a capsule;
**characterized in that**
said first and second bodies (108, 8) are mutually engageable such that they are jointly movable throughout the relative displacement of the receiving member (7) between said opening and closing positions, said second body (8) being engageable with and disengageable from the first body (108) transversely to the coupling direction of said members (6, 7).

2. Infusion assembly according to Claim 1, wherein one (6) of said members (6,7) is provided with a radially protruding annular sealing element (18) and wherein in the closed position one (7) of said members (6,7) partially penetrates inside the other one (6) such that said annular sealing element (18) forms an essentially radial seal between them.

3. Infusion assembly according to Claim 2, wherein said annular sealing element (18) is mounted on the outside of the abutment member (6).

4. Infusion assembly according to one of the preceding claims, wherein said second body (8) has a gripping member (32) able to be manually gripped for engagement/disengagement of the first body (8) with/from the second body (108).

5. Infusion assembly according to one of the preceding claims, wherein said actuator means comprise an electric linear actuating device (14) connected to said support and guide structure (2) and capable of causing back and forth movements of one (7) of said members (6,7) and in particular of the receiving member (7), with respect to the other member (6), along a straight path.

## Patentansprüche

1. Aufgussanordnung (1) für eine Maschine zur Zubereitung von Getränken, insbesondere Kaffee, mit einer Stütz- und Führungsstruktur (2), die während eines Betriebs stationär ist und ein Widerlagerelement (6) sowie ein dazugehöriges hohles Aufnahmeelement (7) trägt, wobei das Aufnahmeelement (7) in der Lage ist, eine Menge oder Dosis einer Substanz, gegebenenfalls vorverpackt in einer Kapsel oder Ähnlichem, zur Zubereitung eines Getränks aufzunehmen; wobei die Elemente (6, 7) in der Lage sind, eine relative Schließposition, in der sie miteinander auf eine Fluid undurchlässige Art und Weise gekoppelt sind, so dass sie eine Aufgusskammer definieren, sowie eine beabstandete Öffnungsposition anzunehmen; wobei das Widerlagerelement (6) mit einer Einrichtung (16) vorgesehen ist, um die Einspritzung von Wasser und/oder Dampf in die Aufgusskammer (15) zu erlauben; wobei eine elektrisch gesteuerte Stellgliedeinrichtung (14) vorgesehen ist, um einen relativen Versatz der Elemente (6, 7) zwischen der Öffnungs- und Schließposition zu bewirken;
wobei das Aufnahmeelement (7) aufweist:
einen ersten Körper (108), der in der Stütz- und Führungsstruktur (2) bewegbar zu und von dem Widerlagerelement (6) weg bewegbar montiert ist, und
einen zweiten Körper (8), der mit dem ersten Körper (108) in Eingriff gebracht und von diesem gelöst werden kann und in dem ein Hohlraum (9) ausgebildet ist, wobei dieser Hohlraum zusammenwirkt, so dass er eine Aufgusskammer definiert, und intern mit einer Vielzahl von perforierten Nadeln (27), die in der Lage sind, eine Wand einer Kapsel zu durchdringen, vorgesehen sein kann;
**dadurch gekennzeichnet, dass**
der erste und der zweite Körper (108, 8) gegenseitig so in Eingriff bringbar sind, dass sie verbunden über den relativen Versatz des Empfangselements (7) zwischen der Öffnungs- und der Schließposition bewegbar sind, wobei der zweite Körper (8) mit dem ersten Körper (108) quer zu der Kupplungsrichtung der Elemente (6, 7) in Eingriff bringbar und von diesen lösbar ist.

2. Aufgussanordnung nach Anspruch 1, wobei eines (6) der Elemente (6, 7) mit einem radial vorstehenden Ringdichtelement (18) vorgesehen ist und wobei in der geschlossenen Position eines (7) der Elemente (6, 7) teilweise in das andere (6) eindringt, so dass das Ringdichtelement (18) eine wesentliche radiale Dichtung zwischen ihnen ausbildet.

3. Aufgussanordnung nach Anspruch 2, wobei das Ringdichtelement (18) an der Außenseite des Widerlagerelements (6) montiert ist.

4. Aufgussanordnung nach einem der vorhergehenden Ansprüche, wobei der zweite Körper (8) ein Greifelement (32) hat, das manuell gegriffen werden kann, um den ersten Körper (8) mit dem zweiten Körper (108) in Eingriff zu bringen oder von diesem zu lösen.

5. Aufgussanordnung nach einem der vorhergehenden Ansprüche, wobei die Stellgliedeinrichtung eine elektrisch lineare Stellgliedvorrichtung (14) aufweist, die mit der Stütz- und Führungsstruktur (2) verbunden und in der Lage ist, Vor- und Zurückbewegungen eines (7) der Elemente (6, 7) und insbesondere des Empfangselements (7), in Bezug auf das andere Element (6), entlang eines geraden Pfads zu bewirken.

## Revendications

1. Ensemble d'infusion (1) pour une machine pour la préparation de boissons, en particulier de café, comprenant une structure de support et de guidage (2) qui est fixe pendant le fonctionnement et porte un élément de butée (6) et un élément de réception (7) creux associé, l'élément de réception (7) pouvant recevoir une quantité ou dose d'une substance, possiblement préemballée dans une capsule ou autre, pour la préparation d'une boisson ; lesdits éléments (6, 7) pouvant prendre une position de fermeture relative dans laquelle ils sont couplés l'un avec l'autre d'une manière étanche au fluide de façon à définir une chambre d'infusion, et une position d'ouverture espacée ; l'élément de butée (6) étant pourvu de moyens (16) pour permettre l'injection d'eau et/ou de vapeur dans la chambre d'infusion (15) ; des moyens d'actionneur commandés électriquement (14) étant prévus pour causer un déplacement relatif desdits éléments (6, 7) entre les positions d'ouverture et de fermeture ;
dans lequel l'élément de réception (7) comprend :
un premier corps (108) qui est monté de façon à pouvoir se déplacer dans ladite structure de support et de guidage (2) vers et depuis l'élément de butée (6), et
un second corps (8), qui peut venir en prise avec et hors de prise d'avec le premier corps (108) et dans lequel une cavité (9) est formée, laquelle cavité coopère de façon à définir la chambre d'infusion et peut être pourvue intérieurement d'une pluralité d'aiguilles perforées (27) pouvant percer une paroi d'une capsule ;
**caractérisé en ce que**
lesdits premier et second corps (108, 8) peuvent venir en prise mutuellement de telle manière qu'ils peuvent être déplacés de manière jointe par le déplacement relatif de l'élément de réception (7) entre lesdites positions d'ouverture et de fermeture, ledit second corps (8) pouvant venir en prise avec et venir hors de prise d'avec le premier corps (108) transversalement à la direction de couplage desdits éléments (6, 7).

2. Ensemble d'infusion selon la revendication 1, dans lequel l'un (6) desdits éléments (6, 7) est pourvu d'un élément de scellement annulaire (18) faisant saillie radialement et dans lequel dans la position fermée l'un (7) desdits éléments (6, 7) pénètre en partie à l'intérieur de l'autre (6) de telle manière que ledit élément de scellement annulaire (18) forme un joint sensiblement radial entre eux.

3. Ensemble d'infusion selon la revendication 2, dans lequel ledit élément de scellement annulaire (18) est monté sur l'extérieur de l'élément de butée (6).

4. Ensemble d'infusion selon l'une quelconque des revendications précédentes, dans lequel ledit second corps (8) comporte un élément d'accrochage (32) pouvant être accroché manuellement pour venue en prise/hors de prise du premier corps (8) avec le/du second corps (108).

5. Ensemble d'infusion selon l'une quelconque des revendications précédentes, dans lequel lesdits moyens d'actionneur comprennent un dispositif d'actionnement linéaire électrique (14) connecté à ladite structure de support et de guidage (2) et pouvant causer des mouvements en avant et en arrière de l'un (7) desdits éléments (6, 7) et en particulier de l'élément de réception (7), par rapport à l'autre élément (6), le long d'un chemin droit.
